# EUROPEAN PATENT SPECIFICATION

(11) **EP 3 950 290 B1**
(45) Date of publication and mention of the grant of the patent: **04.10.2023**
(21) Application number: 20382727.4
(22) Date of filing: 05.08.2020
(51) Int. Cl.: B29D 99/00, B29C 70/44, B29C 70/54

(54) **SANDWICH PANEL WITH A HONEYCOMB CORE AND METHOD FOR MANUFACTURING THEREOF**
SANDWICHPLATTE MIT WABENFÖRMIGEM KERN UND VERFAHREN ZUR HERSTELLUNG DAVON
PANNEAU EN SANDWICH COMPORTANT UNE ÂME EN NID D'ABEILLES ET SON PROCÉDÉ DE FABRICATION

(43) Date of publication of application: 09.02.2022
(73) Proprietor: Airbus Operations, S.L.U., 28906 Getafe (Madrid) (ES); Alestis Aerospace, S.L., 41309 La Rinconada, Sevilla (ES)
(72) Inventor: VÁZQUEZ CASTRO, Jesús Javier, E-28906 Getafe, Madrid (ES); GARCÍA MARTÍN, Diego, E-28906 Getafe, Madrid (ES); BUTRAGUENO MARTÍNEZ, Asunción, E-28906 Getafe, Madrid (ES); FRUTOS MUÑOZ, Ana, E-41309 41309 La Rinconada, Sevilla (ES); MARTÍN BRAVO, José, E-41309 La Rinconada, Sevilla (ES); CALERO CASANOVA, Álvaro, E-28906 Getafe, Madrid (ES); AGUILAR BARROSO, María del Carmen, E-28906 Getafe, Madrid (ES)
(74) Representative: ABG Intellectual Property Law, S.L.

(56) References cited:
- WO-A2-2017/009423
- US-A1- 2009 252 921
- US-A1- 2013 236 688
- US-A1- 2017 066 201

## Description

### TECHNICAL FIELD OF THE INVENTION

The present invention belongs to the field of composites manufacturing, and particularly, it refers to a method for manufacturing an aeronautical sandwich panel with a honeycomb core.

In particular, this manufacturing process provides an optimized core sealing solution for preventing infused resin from entering into the honeycomb core open cells while improving its mechanical properties. This method is applicable not only to flat panels but also to curved or highly curved panels.

In a further embodiment, the invention proposes an automated process for manufacturing honeycomb core sandwich panels by resin infusion.

### BACKGROUND OF THE INVENTION

Sandwich panels are composite materials typically used in aeronautics for weight saving reasons. In general, these panels comprise a sandwich structure formed by a honeycomb core surrounded by composite covers at both sides.

Because of their high strength-to-weight ratio, in aviation honeycomb sandwich panels are primary used for: aerodynamic fairings (i.e. belly fairing, trailing edges or leading edges), access doors or covers (e.g. landing gear doors), and internal panels of the aircraft.

The material used for the sandwich panels depends on the temperature mapping, corrosion constraints in order to avoid galvanic corrosion with adjacent parts, and the required strength for that installing location.

As known, a composite such as the composite covers surrounding the honeycomb core is a fibre reinforced polymer formed by two separate constituents: fibres and resin acting as binding matrix. Thus, manufacturing techniques for these covers are conventionally divided according to whether these constituents are originally together or separated. In the former solution, the composite reinforcement plies around the honeycomb core comprises several layers or plies of fibres pre-impregnated with the resin, the so-called 'pre-preg'; while on the latter there is on one hand dry fibre ply (*so-called* fibre preform), and on the other hand the resin to be infused/injected therein. Regardless the raw material, once both constituents are finally together, the conjunction is subjected to a curing cycle where temperature, pressure and/or vacuum is applied over a predetermined time.

For many years, pre-preg CFRP (carbon fibre reinforced polymer) or GFRP (glass fibre reinforced polymer) were used and, to improve mutual adhesion, an adhesive layer at the interface between the plies and the honeycomb was placed since the resin present in the pre-preg plies was deemed insufficient to produce a good meniscus at plies to honeycomb interface.

Honeycomb sandwich panels were traditionally manufactured with these pre-preg materials because of their low resin flow that prevents resin from entering the open cells of the honeycomb. Moreover, these tapes or plies allow very little air permeability entailing no proper vacuuming inside the core cells. That is why these sandwiches are manufactured only in exceptional cases and assuming the problems that will appear during their manufacturing further penalizing their mechanical properties.

On the other hand, for sandwichs using dry fibre technologies, closed-cell foams were preferred instead of honeycomb core with open-cells since resin completely filled into them.

In this case, that is, when the both constituents of the composite covers are originally separated, the basic steps are: placing dry fabric or fibre preform into a cavity of a mould surrounding the honeycomb core, then the mould is closed (either by a vacuum bag on the other half of the mould) and the thermoset resin (typically epoxy resin) is injected (if the mould is closed with *the other half of the mould*) or infused (as known in case of using *the vacuum bag*) through a set of injection ports under relatively low pressure. Once the resin impregnates the whole fibre preform, the ensemble is cured as a finished component to be demoulded in a last step.

Document EP1897680A1, describes a solution for avoiding the resin to enter into the open cells of the honeycomb when manufacturing sandwich panels by resin infusion techniques. Above the honeycomb, it is placed, from the inside to the outside, a curable adhesive layer and an impervious barrier layer (pervious to gas to let deaerate but impervious to resin) to form and seal the honeycomb core. Then, dry fibres are placed on top and the infusion process is performed under vacuum US2009252921A1 discloses the preamble of claim 1.

This known solution works properly for simple and flat or substantially flat panels but there is still a need for manufacturing curved or highly curved panels as the ones typically used in aeronautics since dry fibre preforms normally skid during the infusion process. Finally, the existing manufacturing processes either with pre-preg or infusion/injection process as explained are so far a manual processes, thus entailing that all the materials used for the part as well as any other ancillary plies, for instance, in regard of the resin infusion/injection or for the curing process, are placed and adapted to the different geometries by hand.

Therefore, there is a need in the industry for an easy, quick, reliable, and effective fabrication of sandwich panels that can be applied extensively regardless of the intended geometry while assuring the imparted mechanical properties so as to meet structural requirements.

### SUMMARY OF THE INVENTION

The present invention provides a solution for the aforementioned problems, by a method for manufacturing a sandwich panel according to claim 1, and the resulting sandwich panel according to claim 8. In dependent claims, preferred embodiments of the invention are defined.

In a first inventive aspect, the invention provides a method for manufacturing a sandwich panel with a honeycomb core, said method comprising:
- laying-up an ensemble formed by a honeycomb core having honeycomb cells and, at least on one side on said honeycomb core, from the inside to the outside: a curable adhesive layer and an amorphous thermoplastic film;
- laying-up dry fibre over the ensemble;
- arranging said dry fibre and ensemble on a one-sided mould and confining it in a gas-tight space by arranging a vacuum sheet over said one-sided mould;
- producing a vacuum in said gas-tight space before complete or partial curing of said adhesive layer, so that said honeycomb cells are at least partly evacuated before they are sealed by the curable adhesive layer and an amorphous thermoplastic film;
- infusing said fibre layer under vacuum with a resin; and
- curing said resin under vacuum and temperature cycle;
the method being characterized in that: the amorphous thermoplastic film (3.1) is made of Polyvinyl Fluoride (PVF), Polyetherketoneketone (PEKK), Polyaryletherketone (PAEK), Polyether ether ketone (PEEK), Polyethylenimine (PEI) or Polyphenylene sulfide (PPS).

Therefore, the amorphous thermoplastic film is bonded to the honeycomb core thanks to the adhesive layer, and to the dry fibre plies by means of the following infused resin.

The thermoplastic film has an amorphous structure, i.e. a randomly ordered polymeric structure. By amorphous structure it is deemed a 0% crystalline degree, but semi-crystalline with a crystalline degree below 5% at atmospheric conditions is considered equivalent. Thus, the thermoplastic film according to the invention can be named an amorphous or little semi-crystalline (i.e. with a crystalline degree below 5%) thermoplastic film.

Advantageously, these amorphous or little semi-crystalline thermoplastic films soften gradually as the temperature increases rather than having a sharp melting point like semi-crystalline polymers. In addition, amorphous thermoplastics typically soften about 120 - 150°C (or even 240°C) (of glass transition temperature) while semi-crystalline thermoplastics has approx. 400°C of melting temperature.

As a result of being amorphous, the drapability is enhanced and the thermoplastic film acting as a resin barrier better adapts to the ensemble shapes.

Thermoplastic films used to wrap cores in composite manufacturing are typically stiffer, rendering necessary to produce cuts therein to improve drapability, but consequently their resin-barrier function is lost.

With the present invention, either flat, curved or highly curved panels (i.e. radius up to 400-800mm) can be manufactured without prompting the defects that are typically produced at the edge of the honeycomb core such as bridges, core crushing, depression at the edge of the honeycomb cores or telegraphing.

Apart from the panel shape, the invention is not constrained by the material, density or strength of honeycomb core and it can be applied regardless of panel size, to panels with only one or multiple honeycomb cores, or even panels comprising large composite monolithic areas together with honeycomb cores, or staggered cores. In other words, the present invention is a versatile solution.

In a preferred embodiment, the amorphous thermoplastic film is pervious to gases and impervious to resin so that, advantageously, the extraction of the air entrapped in the honeycomb cells is therefore promoted without exposing the open honeycomb cores to the resin infusion process.

In the absence of an amorphous thermoplastic film pervious to gases, the invention is still practicable since air may escape laterally from the honeycomb core.

Examples of this amorphous (or little semi-crystaline) thermoplastic films may be made of Polyvinyl Fluoride (PVF), Polyetherketoneketone (PEKK), Polyaryletherketone (PAEK), Polyether ether ketone (PEEK), Polyethylenimine (PEI) or Polyphenylene sulfide (PPS). Preferably it can be made of PEKK, PAEK, or PEEK.

In order to avoid the infused resin to enter in the honeycomb core cells, both materials, the amorphous thermoplastic film and the adhesive layer, should have the same or similar dimensions and must cover completely all the surface of the honeycomb core.

Thus, as mentioned, honeycomb core is thus sealed during adhesive layer curing, which occurs mostly or totally before resin infusion. Depending on panel complexity the adhesive layer curing can be performed in the same cycle just before resin infusion (for simple geometries) or in a separate curing cycle.

Therefore, in a particular embodiment, the complete or partial curing of the adhesive layer under vacuum is performed before the step of laying-up the dry fibre over the ensemble.

Especially for non-flat sandwich panels (i.e. radius up to 400-800mm), or with complex core geometries, performing this pre-curing cycle may accomplish an effective core sealing. In this previous curing cycle, the adhesive film bonds the thermoplastic film to the honeycomb core, providing at the same time, the curved and/or complex shape to the core facilitating afterwards the dry fibre plies positioning.

This pre-curing for the adhesive layer is typically performed at 120°C during 2 hours.

In a preferred embodiment, the method further comprises:
- laying-up a bottom amorphous thermoplastic film and a bottom curable adhesive layer below the honeycomb core to be part of the ensemble; and
- laying-up bottom dry fibre below the ensemble.

That is, the ensemble is formed by the honeycomb core, bottom and top curable adhesive layers, and bottom and top amorphous thermoplastic films.

In addition, surrounding such an ensemble, there are bottom and top dry fibre plies.

In an embodiment, these dry fibre plies comprise a binder on their surfaces promoting the plies being bonded to each other and because innermost plies shall contact the amorphous thermoplastic film, the binder may assist in its bonding with the thermoplastic film.

This further improves core adaptation while reduces possible further core defects caused by undesirable movement of the following dry fabric plies.

In this embodiment, the method according to the invention further comprises performing a hot membrane forming to the top dry fibre over the ensemble.

This hot membrane forming is typically performed at any value between 80°C - 105°C for sufficient time which depends on the technical means used. A typical value is between 15 to 30 minutes.

Advantageously, this allows consolidating the dry fabric plies to the final shape of the panel in order to reduce further defects due to undesirable movement of the fabrics during curing.

One of the key factors for assuring good mechanical properties to be imparted in the final panel lies with the resin infusion process. Conventionally, the resin is delivered through an inlet channel on a lateral of the panel and, then, is distributed through the dry fibre plies. This process continues up to infusing all these dry fibre plies throughout their thickness, except for the honeycomb core thanks to the barrier layer that prevents resin from entering therein.

During this resin infusion process, attention should be paid on avoiding any resin bridging or preferred channels for the resin impregnation such as air trapped within the core.

Thus, to optimize the mechanical properties of the resulting panel, a specific resin infusion process has been developed.

In this regard, in a particular embodiment, a first resin infusion mesh is arranged underneath the bottom dry fibre, and a second resin infusion mesh is arranged on top of the top dry fibre.

As known, a resin infusion mesh is a mesh pattern which promotes resin flow during the infusion process. These resin infusion meshes create preferable paths for the correct distribution of the resin within the dry fibre plies as they provide a more suitable surface tension.

Inventors have found that resin impregnation in plane is limited to a few hundred of millimetres rendering suitable only for small size panels. Thus, in case of panels with complex geometries or large size panels, the resin infusion process need to be assisted by these resin infusion meshes, especially for avoiding dry areas in the central area of the core caused by the honey-comb presence.

Furthermore, optimal mechanical properties of the panels caused by proper resin impregnation have been found by infusing the resin trough a central inlet of the one-sided mould while being assisted by these two resin infusion mesh.

In a preferred embodiment, the one-sided mould comprises a substantially central inlet for letting matrix material infuse the dry fibre. Then, in this embodiment, the matrix material infuses said fibre layer through a substantially central inlet of the one-sided mould.

That is, the resin is delivered through a hole placed in the tool, i.e. below the core, approximately at the panel centre. The first resin infusion mesh placed beneath the plies, in contact with the tool, promotes resin distributes along all the lower surface quicker than in a standard process. Then, once the resin reaches the honey-comb core edges, it goes up towards the top dry fibre plies thanks to the other resin infusion mesh located on top.

As a result, higher mechanical properties than those achieved conventionally have been obtained. In particular, the Flat Wise Tension ('FWT') test and Drum Peel Test have been conducted. For FWT, values above 6MPa have been achieved with high density honeycomb cores (e.g. around 96kg/m3), meaning that failure will occur within the honeycomb first, for any standard honeycomb core in terms of density and strength. In other words, the resulting interface joint either between the cured adhesive layer and amorphous thermoplastic film or between the amorphous thermoplastic film and the resin-infused is stronger (at least twice in terms of resistance) than in conventional panels.

Also, in view of these results, sandwich structures can be used in aeronautics for secondary structures regardless of its honeycomb core density. Also, since these results exceed expectations, the present invention may bring the use of sandwich panel structures with high-density honeycomb cores in primary structures in aeronautics thanks to their outshining mechanical behaviour.

Further, sandwich panels manufactured according to the present invention are watertight. Unlike using a dedicated outer impervious film (e.g. PVF film) for ensuring the water-tightness function that is exposed and, consequently, subjected to tearing; the present invention benefits from embedding an amorphous thermoplastic film closer to the honeycomb core and, thus, it is protected by the surrounding composite covers.

Water-tightness tests have determined that no water ingestion is produced when test conditions represent the whole service life of the aeronautical panel. This is a key parameter to ensure that there are no undesired weight increase or degradation due to water present inside the honeycomb cells.

In addition, the present invention proposes an automated process with no or minor human contribution, allowing to eradicate any defect, resin bridge or deformation of the dry fabric plies placed over the honeycomb core.

In this embodiment, the method is automated by:
- cutting at least the curable adhesive layer, the amorphous thermoplastic film and the dry fibre by a computer numerical control machine;
- arranging the honeycomb core, a top curable adhesive layer and a top amorphous thermoplastic film on the one-sided mould by a pick-and-place machine;
- arranging dry fibre on top by said pick-and-place machine; and
- further arranging a vacuum sheet on top by said pick-and-place machine, forming a gas-tight space with the one-sided mould thereby.

Note that vacuum sheet forms a gas-tight space with the one-sided mould, as known, by sealing the edges of the vacuum sheet.

In case the honey-comb core is to be sealed at both sides with a composite covers, the method further comprises cutting, by the computer numerical control machine, a bottom curable adhesive layer and a bottom amorphous thermoplastic film and arranging them, by the pick-and-place machine, beneath the honey-comb core.

Advantageously, the degree of automation is highly increased since dry fiber plies can be arranged with the pick-and-place machine. On the contrary, pre-preg should be laid in situ and has additional drawbacks such as their stickiness thus preventing its automation.

So far, it is not known by the inventors a manufacturing process for sandwich panels using either pre-preg or infusion/injection processes that allow fully automatization without jeopardizing the mechanical properties of the final panel.

To expedite the process, the method can further prepare the auxiliary infusion materials commonly used in vacuum systems such as peel plies, perforated release films and any resin infusion mesh. To do so, the computer numerical control machine cut these auxiliary plies and the pick-and-place machine arranges them in the correct order.

In a second inventive aspect, the invention provides a sandwich panel manufactured by any of the embodiments of the method of the first inventive aspect, wherein the sandwich panel comprises a honeycomb core having honeycomb cells and, at least on one side on said honeycomb core, from the inside to the outside: a curable adhesive layer and an amorphous thermoplastic film. Said sandwich panel is characterized in that: the amorphous thermoplastic film is made of Polyvinyl Fluoride (PVF), Polyetherketoneketone (PEKK), Polyaryletherketone (PAEK), Polyether ether ketone (PEEK), Polyethylenimine (PEI) or Polyphenylene sulfide (PPS).

In a preferred embodiment, this sandwich panel is a non-flat aeronautical sandwich panel with a curvature radius up to 800mm, preferably with a curvature radius up to 400mm.

Although unclaimed, as part of the disclosure it is also described a manufacturing tool for manufacturing a sandwich panel according to embodiments of the method of the first inventive aspect, wherein this manufacturing tool comprises:
- a one-sided mould suitable for arranging dry fibre and an ensemble formed by a honeycomb core having honeycomb cells and, at least on one side on said honeycomb core, from the inside to the outside: a curable adhesive layer and an amorphous thermoplastic film, wherein said one-sided mould preferably comprises a substantially central inlet configured to let the resin infuse the dry fibre;
- a vacuum sheet configured to be arranged over said one-sided mould for forming a gas-tight space therein, and
- a first resin infusion mesh configured to be arranged underneath the bottom dry fibre, and a second resin infusion mesh configured to be arranged on top of the top dry fibre over the ensemble.

In a particular unclaimed embodiment, the manufacturing tool further comprises:
- a computer numerical control machine configured to cut curable adhesive layer, amorphous thermoplastic film and dry fibre;
- optionally, this computer numerical control machine being also configured to cut auxiliary infusion plies such as peel ply, perforated release films and any resin infusion mesh;
- a pick-and-place machine configured to arrange a bottom curable adhesive layer, a bottom amorphous thermoplastic film, the honeycomb core, a top curable adhesive layer and a top amorphous thermoplastic film on the one-sided mould;

- optionally, this pick-and-place machine being also configured to arrange bottom and top dry fibre and any auxiliary infusion material on the one-sided mould; and
- means for arranging a vacuum sheet on top, while forming the gas-tight space therein.

In a particular unclaimed embodiment, the manufacturing tool further comprises:
- means for automatically performing a hot membrane forming to the dry fibre plies over the ensemble formed by the honeycomb core having honeycomb cells and, and at least on one side on said honeycomb core, from the inside to the outside: a curable adhesive layer and an amorphous thermoplastic film.

As known, hot membrane forming is a type of 'pre-forming' step that typically uses a membrane and heat to exert pressure over the preform in order to consolidate it.

Advantageously, because of the automated nature of these embodiments, high temperature can be kept in the transmissions between steps.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a schematic ensemble of the honeycomb core with amorphous thermoplastic films and curable adhesive layers.
- Figure 2: This figure shows a schematic panel according to the present invention.
- Figure 3: This figure shows a schematic embodiment of an unclaimed manufacturing tool with the resulting arrangement of plies.

### DETAILED DESCRIPTION OF THE INVENTION

As it will be appreciated by one skilled in the art, aspects of the present description may be embodied as a method, as features of the resulting sandwich panel or as a manufacturing tooling.

The invention defines a method for manufacturing a sandwich panel with a honeycomb core (1) according to claim 1.

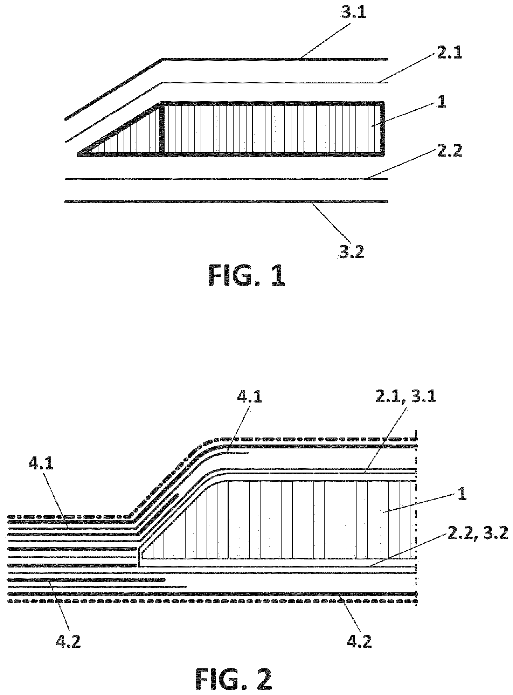

Figure 1 depicts an ensemble formed by a honeycomb core (1) having honeycomb cells and, at both sides of said honeycomb core, from the inside to the outside: bottom (2.1) and top (2.2) curable adhesive layers, and bottom (3.1) and top (3.1) amorphous thermoplastic films.

These amorphous thermoplastic films (3.1, 3.2) (or little semi-crystalline, i.e. preferably less than 5% of crystallinity degree) are, for exemplary purposes, Polyvinyl Fluoride (PVF), Polyetherketoneketone (PEKK), Polyaryletherketone (PAEK), Polyether ether ketone (PEEK), Polyethylenimine (PEI) or Polyphenylene sulfide (PPS).

Advantageously, these amorphous thermoplastic films (3.1, 3.2) have a surface treatment to improve adhesion with their respective adhesive layers (2.1, 2.2).

The honeycomb core (1) is, preferably, but not limited to, a hexagonal-cells polyamide paper with phenolic resin impregnated. And, further, the adhesive films (2.1, 2.2) for composite bonding are preferably, but not limited to, structural epoxy with dual curing temperature: 120°C and 180°C curing.

Either compacted or not, during the process of curing the adhesive layer(s) air extraction from honeycomb core cells to avoid the air being trapped inside shall be considered. In order words, that said honeycomb cells are at least partly evacuated before they are sealed by the curable adhesive layer (2.1, 2.2) and the amorphous thermoplastic film (3.1, 3.2). Accordingly, certain vacuum level is preferably applied to the ensemble at room temperature to allow such air extraction and, then, heat is gradually applied while maintaining such vacuum.

This vacuum level should be the maximum level that avoids core collapsing which is an effect that depends, inter alia, on the core geometry, chamfer slope and core density. Thus, the standard vacuum level for a sandwich panel is typically between 200 - 400mbar.

Then, the process continues by laying-up the dry fibber plies (4.1, 4.2) over such an ensemble, either compacted or not.

These dry fibre plies (4.1, 4.2) may be of any dry reinforce type such as glass (for Glass Fibre Reinforcement Polymer, `GRFP'), carbon (for Carbon Fibre Reinforcement Polymer, 'CRFP'), fabric (crimped) or non-crimp fabric (also made of carbon or grass fibre) to be placed on top of the ensemble, i.e. the sealed honeycomb core (1). For instance, figure 2 depicts an example of the resulting arrangement with dry fibre plies (4.1, 4.2) below and above the ensemble.

In figure 2, it can be seen that bottom (4.2) and top (4.1) dry fibre plies extend beyond the edge of the honeycomb core (1) following it contour and are finally brought together.

Also, these bottom (4.2) and top (4.1) dry fibre plies may mix plies of glass and carbon.

Then, once arranged on a one-sided mould (12) and covered by the vacuum sheet (8, 9, 10), vacuum is applied again in the gas-tight space for assisting resin flow through the dry fibre plies. To help resin in flow easily and reach all areas of the dry fiber plies (4.1, 4.2), a particular temperature is applied during this step, typically around 120°C.

And, finally, once the resin has properly infused the dry fiber plies (4.1, 4.2), said resin is cured by increasing the temperature according to a particular curing cycle.

According to the present invention, there are two main embodiments for performing the method.

In a first example, all the plies of the sandwich panel are laid-up on the one-sided mould (12) in the correct order and confined by the vacuum sheet (8, 9, 10), thus including the ensemble, the dry fibre plies and any auxiliary infusion plies. Then, vacuum is applied and maintained around 200 - 400mbarfor 15 min (or any other time up to 120 min). Next, temperature rises at a value from 80°C to 105°C and plies are hot formed together for 15 min (or any other time up to 30 min). Then, temperature rises again at 120°C (i.e. predetermined adhesive curing temperature) for adhesive curing and maintained in these conditions for 2 hours. Finally, resin is infused and temperature rises up to around 180°C where it is maintained for resin curing according to the curing cycle.

In a second example, the method comprises three main steps:
- laying-up the ensemble formed by the honeycomb core (1), curable adhesive layers (2.1, 2.2) and amorphous thermoplastic films (3.1, 3.2), and applying vacuum and heat for curing the adhesive layers at 120°C (i.e. predetermined adhesive curing temperature) in order to seal the honey-comb core;
- next, dry fibre plies (4.1, 4.2) are laid-up over the ensemble and temperature is raised and maintained at 90°C for membrane hot forming; and
- finally, resin is infused and temperature rises up to around 180°C where it is maintained for resin curing according to the curing cycle.

As mentioned, in this second example, the plies adapt better to the final geometry preventing dry fibre plies from skidding before the resin infusion.

Preferably, for any of these two examples, vacuum is also applied for a predetermined time between adhesive curing and resin infusion to mitigate the air expansion during the following curing cycle because of the high temperature. The exact time varies depending on core size, density and vacuum level applied previously.

As mentioned, these examples can be automated as follows:
- cutting all auxiliary infusion plies such as peel ply (5.1, 5.2), perforated release films (6.1, 6.2) and any resin infusion mesh (7.1, 7.2) in a computer numerical control ('CNC') machine;
- cutting the dry fibre plies (either CFRP, GFRP, fabrics or Non Crimp Fabrics) (4.1, 4.2), the bottom (2.2) and top (2.1) adhesive films, the bottom (3.2) and top (3.1) amorphous thermoplastic films, and optionally, a copper or bronze foils for lightning strike protection in the CNC machine;
- using a pick-and-place machine to arrange in the one-sided tool (12), the auxiliary infusion plies underneath the ensemble;
- using the pick-and-place machine to arrange the bottom dry fibre plies (4.2), and the honeycomb core (1) with both adhesive layers (2.1, 2.2) and both amorphous thermoplastic films (3.1, 3.2);
- performing a hot membrane forming at 90 °C to adapt these plies, so that the adhesive layers (2.1, 2.2) and thermoplastic films (3.1, 3.2) perfectly adapt to the honeycomb core (1) shape;
- using the pick-and-place machine to arrange the auxiliary infusion plies on top;
- curing the adhesive layers at the predetermined adhesive curing temperature in order to seal the honey-comb core; and
- infusing resin and performing the curing cycle, preferably in an oven.

Otherwise, instead of the oven, the curing cycle can be performed in an autoclave without pressure.

The skilled person shall recognize that the step of sealing the honey-comb core (i.e. curing the adhesive layers as defined by such material) and the step of performing the membrane hot forming may be swapped. Therefore, the basic steps should be: a) hot forming, adhesive curing, resin infusion and curing; or b) adhesive curing, hot forming, resin infusion and curing.

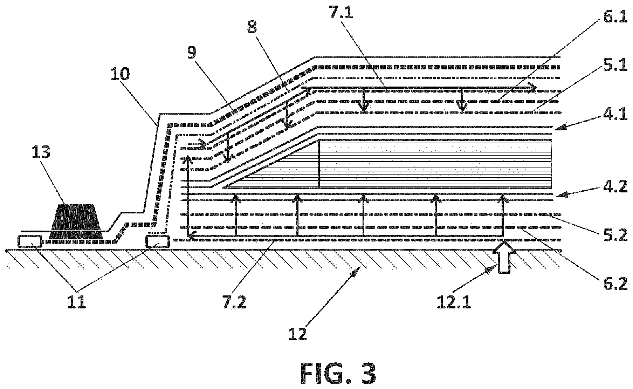

Figure 3 depicts a schematic embodiment of a manufacturing tool with the resulting arrangement of plies according to an embodiment of the present invention where auxiliary infusion plies are also laid-up.

In the middle of the figure, it is seen the honeycomb core (1) with top (2.1) and bottom (2.2) adhesive layers and top (3.1) and bottom (3.2) amorphous thermoplastic films for the function of sealing and stabilizing the core. For illustrative purposes, it is depicted as a single element with the shape of the honeycomb core (1).

Above and below this sealed honeycomb core, it is seen the dry fibre plies (4.1, 4.2) which extend beyond the edge of the honeycomb core and, thus, are brought together.

Also at both sides, there are auxiliary infusion plies such as, from the inside to the outside: peel plies (5.1, 5.2), perforated release films (6.1, 6.2) and a first (bottom) (7.2) and second (top) (7.1) resin infusion meshes.

Regarding the manufacturing tool for manufacturing a sandwich panel according to the previous embodiments, this manufacturing tool at least comprises:
- a one-sided mould (12) with a substantially central inlet (12.1) configured to let the resin infuse the dry fibre (4.1, 4.2); and
- a vacuum sheet (8, 9, 10) configured to be arranged over said one-sided mould (12) for forming a gas-tight space therein.

As known, the vacuum sheet typically comprises a semipermeable membrane (8), an airweaver (9), and the plastic bag (10).

Also, it has been depicted the sealant tape (11) that let the vacuum sheet (8, 9, 10) form a gas-tight space with the one-sided mould (12). On the left side of figure 3, it can be seen the vacuum system (13) to draw the air out of such gas-tight space.

In addition, for exemplary purposes, the expected path of the resin has been drawn by thicker arrows.

## Claims

1. A method for manufacturing a sandwich panel with a honeycomb core (1), said method comprising:
- laying-up an ensemble formed by a honeycomb core (1) having honeycomb cells and, at least on one side on said honeycomb core (1), from the inside to the outside: a curable adhesive layer (2.1) and an amorphous thermoplastic film (3.1);
- laying-up dry fibre (4.1) over the ensemble;
- arranging said dry fibre (4.1) and ensemble on a one-sided mould (12) and confining it in a gas-tight space by arranging a vacuum sheet (8, 9, 10) over said one-sided mould (12);
- producing a vacuum in said gas-tight space before complete or partial curing of said adhesive layer (2.1), so that said honeycomb cells are at least partly evacuated before they are sealed by the curable adhesive layer (2.1) and an amorphous thermoplastic film (3.1);
- infusing said fibre layer (4.1) under vacuum with resin; and
- curing said resin under vacuum and temperature cycle;
the method being **characterized in that**: the amorphous thermoplastic film (3.1) is made of Polyvinyl Fluoride (PVF), Polyetherketoneketone (PEKK), Polyaryletherketone (PAEK), Polyether ether ketone (PEEK), Polyethylenimine (PEI) or Polyphenylene sulfide (PPS).

2. The method for manufacturing a sandwich panel according to claim 1, wherein the complete or partial curing of the adhesive layer (2.1) under vacuum is performed before the step of laying-up the dry fibre (4.1) over the ensemble.

3. The method for manufacturing a sandwich panel according to any of claims 1 or 2, further comprising:
- laying-up bottom dry fibre (4.2) below the ensemble;
- laying-up a bottom amorphous thermoplastic film (3.1) and a bottom curable adhesive layer (2.1) below the honeycomb core to be part of the ensemble.

4. The method for manufacturing a sandwich panel according to claim 3, wherein a first resin infusion mesh (7.1) is arranged underneath the bottom dry fibre (4.2), and a second resin infusion mesh (7.2) is arranged on top of the top dry fibre (4.1).

5. The method for manufacturing a sandwich panel according to any of claims 1 to 4, wherein resin infuses said fibre layer through a substantially central inlet (12.1) of the one-sided mould (12).

6. The method for manufacturing a sandwich panel according to claim 3 and any of claims 1 to 5, wherein the method is automated by:
- cutting at least the curable adhesive layer (2.1, 2.2), the amorphous thermoplastic film (3.1, 3.2) and the dry fibre (4.1, 4.2) by a computer numerical control machine;
- optionally, cutting auxiliary infusion plies such as peel ply (5.1, 5.2), perforated release films (6.1, 6.2) and any resin infusion mesh (7.1, 7.2) by the computer numerical control machine;
- optionally, arranging bottom dry fibre (4.2) and any auxiliary infusion material on a one-sided mould (12) by a pick-and-place machine;
- arranging a bottom amorphous thermoplastic film (3.2), a bottom curable adhesive layer (2.2), the honeycomb core (1), a top curable adhesive layer (2.1) and a top amorphous thermoplastic film (3.1) by the pick-and-place machine;
- arranging dry fibre (4.1) on top, and optionally any auxiliary infusion material, by the pick-and-place machine; and
- arranging a vacuum sheet (8, 9, 10) on top, forming a gas-tight space thereby.

7. The method for manufacturing a sandwich panel according to any of claims 1 to 6, wherein the method further comprises automatically performing a hot membrane forming to the top dry fibre (4.1) over the ensemble before the complete or partial curing of any adhesive layer (2.1, 2.2).

8. A sandwich panel manufactured by the method according to any of claims 1 to 7, wherein the sandwich panel comprises a honeycomb core (1) having honeycomb cells and, at least on one side on said honeycomb core, from the inside to the outside: a curable adhesive layer (2.1) and an amorphous thermoplastic film (3.1); and
**characterized in that**:
the amorphous thermoplastic film (3.1) is made of Polyvinyl Fluoride (PVF), Polyetherketoneketone (PEKK), Polyaryletherketone (PAEK), Polyether ether ketone (PEEK), Polyethylenimine (PEI) or Polyphenylene sulfide (PPS).

## Patentansprüche

1. Verfahren zur Herstellung einer Sandwichplatte mit einem Wabenkern (1), wobei das Verfahren umfasst:
- Auflegen einer Anordnung, gebildet von einem Wabenkern (1), der Wabenzellen aufweist, und an wenigstens einer Seite des Wabenkerns (1) von innen nach außen: einer härtbaren Klebstoffschicht (2.1) und einem amorphen thermoplastischen Film (3.1);
- Auflegen von Trockenfasern (4.1) auf die Anordnung;
- Anordnen der Trockenfasern (4.1) und der Anordnung auf ein einseitiges Formwerkzeug (12) und Einschließen davon in einen gasdichten Raum durch Anordnen einer Unterdruckbahn (8, 9, 10) über dem einseitigen Formwerkzeug (12);
- Erzeugen eines Unterdrucks in dem gasdichten Raum vor vollständigem oder teilweisem Härten der Klebstoffschicht (2.1), so dass die Wabenzellen wenigstens teilweise evakuiert werden, bevor sie von der härtbaren Klebstoffschicht (2.1) und einem amorphen thermoplastischen Film (3.1) verschlossen werden;
- Infundieren der Faserschicht (4.1) unter Unterdruck mit Harz; und
- Härten des Harzes unter Unterdruck und Temperaturzyklus;
wobei das Verfahren **dadurch gekennzeichnet ist, dass**: der amorphe thermoplastische Film (3.1) aus Polyvinylfluorid (PVF), Polyetherketonketon (PEKK), Polyaryletherketon (PAEK), Polyetheretherketon (PEEK), Polyethylenimin (PEI) oder Polyphenylensulfid (PPS) hergestellt ist.

2. Verfahren zur Herstellung einer Sandwichplatte gemäß Anspruch 1, wobei das vollständige oder teilweise Härten der Klebstoffschicht (2.1) unter Unterdruck vor dem Schritt des Auflegens der Trockenfasern (4.1) auf die Anordnung durchgeführt wird.

3. Verfahren zur Herstellung einer Sandwichplatte gemäß einem der Ansprüche 1 oder 2, ferner umfassend:
- Auflegen von unteren Trockenfasern (4.2) unter der Anordnung;
- Auflegen eines unteren amorphen thermoplastischen Films (3.1) und einer unteren härtbaren Klebstoffschicht (2.1) unter dem Wabenkern, um Teil der Anordnung zu bilden.

4. Verfahren zur Herstellung einer Sandwichplatte gemäß Anspruch 3, wobei ein erstes Harzinfusionsnetz (7.1) unterhalb der unteren Trockenfasern (4.2) angeordnet wird und ein zweites Harzinfusionsnetz (7.2) auf den oberen Trockenfasern (4.1) angeordnet wird.

5. Verfahren zur Herstellung einer Sandwichplatte gemäß einem der Ansprüche 1 bis 4, wobei Harz die Faserschicht durch einen im Wesentlichen zentralen Einlass (12.1) des einseitiges Formwerkzeugs (12) infundiert.

6. Verfahren zur Herstellung einer Sandwichplatte gemäß Anspruch 3 und einem der Ansprüche 1 bis 5, wobei das Verfahren automatisiert ist durch:
- Schneiden wenigstens der härtbaren Klebstoffschicht (2.1, 2.2), des amorphen thermoplastischen Films (3.1, 3.2) und der Trockenfasern (4.1, 4.2) durch eine numerische Computersteuermaschine;
- gegebenenfalls Schneiden von Hilfs-Infusionslagen, wie z.B. Abziehlage (5.1, 5.2), perforierte Ablösefilme (6.1, 6.2) und ein beliebiges Harzinfusionsnetz (7.1, 7.2), durch die numerische Computersteuermaschine;
- gegebenenfalls Anordnen von unteren Trockenfasern (4.2) und eines beliebigen Hilfs-Infusionsmaterials auf einem einseitigen Formwerkzeug (12) durch eine Bestückungsmaschine;
- Anordnen eines unteren amorphen thermoplastischen Films (3.2), einer unteren härtbaren Klebstoffschicht (2.2), des Wabenkerns (1), einer oberen härtbaren Klebstoffschicht (2.1) und eines oberen amorphen thermoplastischen Films (3.1) durch die Bestückungsmaschine;
- Anordnen von Trockenfasern (4.1) und gegebenenfalls eines beliebigen Hilfs-Infusionsmaterials darauf durch die Bestückungsmaschine; und
- Anordnen einer Unterdruckbahn (8, 9, 10) darauf, um einen gasdichten Raum zu bilden.

7. Verfahren zur Herstellung einer Sandwichplatte gemäß einem der Ansprüche 1 bis 6, wobei das Verfahren ferner automatisches Durchführen von Warmmembranbilden an den oberen Trockenfasern (4.1) über der Anordnung vor dem vollständigen oder teilweisen Härten einer Klebstoffschicht (2.1, 2.2) umfasst.

8. Sandwichplatte, hergestellt durch das Verfahren gemäß einem der Ansprüche 1 bis 7, wobei die Sandwichplatte einen Wabenkern (1) mit Wabenzellen und an wenigstens einer Seite des Wabenkerns von innen nach außen umfasst: eine härtbare Klebstoffschicht (2.1) und einen amorphen thermoplastischen Film (3.1); und
**dadurch gekennzeichnet, dass**:
der amorphe thermoplastische Film (3.1) aus Polyvinylfluorid (PVF), Polyetherketonketon (PEKK), Polyaryletherketon (PAEK), Polyetheretherketon (PEEK), Polyethylenimin (PEI) oder Polyphenylensulfid (PPS) hergestellt ist.

## Revendications

1. Procédé destiné à fabriquer un panneau sandwich avec une âme en nid d'abeilles (1), ledit procédé comprenant :
- l'empilement d'un ensemble formé par une âme en nid d'abeilles (1) ayant des cellules de nid d'abeilles et, au moins sur un côté de ladite âme en nid d'abeilles (1), de l'intérieur vers l'extérieur : une couche adhésive durcissable (2.1) et un film thermoplastique amorphe (3.1) ;
- l'empilement d'une fibre sèche (4.1) par-dessus l'ensemble ;
- la disposition de ladite fibre sèche (4.1) et de l'ensemble sur un moule simple face (12) et le confinement de celui-ci dans un espace étanche aux gaz par disposition d'une feuille à vide (8, 9, 10) par-dessus ledit moule simple face (12) ;
- la production d'un vide dans ledit espace étanche aux gaz avant durcissement complet ou partiel de ladite couche adhésive (2.1), de telle sorte que lesdites cellules de nid d'abeilles sont au moins partiellement évacuées avant qu'elles soient scellées par la couche adhésive durcissable (2.1) et un film thermoplastique amorphe (3.1) ;
- l'infusion de ladite couche de fibre (4.1) sous vide avec une résine ; et
- le durcissement de ladite résine sous un cycle de vide et de température ;
le procédé étant **caractérisé en ce que** : le film thermoplastique amorphe (3.1) est constitué de polyfluorure de vinyle (PVF), polyéthercétonecétone (PEKK), polyaryléthercétone (PAEK), polyétheréthercétone (PEEK), polyéthylèneimine (PEI) ou polysulfure de phénylène (PPS).

2. Procédé destiné à fabriquer un panneau sandwich selon la revendication 1, dans lequel le durcissement complet ou partiel de la couche adhésive (2.1) sous vide est effectué avant l'étape d'empilement de la fibre sèche (4.1) par-dessus l'ensemble.

3. Procédé destiné à fabriquer un panneau sandwich selon l'une quelconque des revendications 1 et 2, comprenant en outre :
- l'empilement d'une fibre sèche inférieure (4.2) sous l'ensemble ;
- l'empilement d'un film thermoplastique amorphe inférieur (3.1) et d'une couche adhésive durcissable inférieure (2.1) sous l'âme en nid d'abeilles pour qu'ils fassent partie de l'ensemble.

4. Procédé destiné à fabriquer un panneau sandwich selon la revendication 3, dans lequel un premier treillis d'infusion de résine (7.1) est disposé au-dessous de la fibre sèche inférieure (4.2), et un deuxième treillis d'infusion de résine (7.2) est disposé au-dessus de la fibre sèche supérieure (4.1).

5. Procédé destiné à fabriquer un panneau sandwich selon l'une quelconque des revendications 1 à 4, dans lequel la résine infuse ladite couche de fibre par une entrée sensiblement centrale (12.1) du moule simple face (12).

6. Procédé destiné à fabriquer un panneau sandwich selon la revendication 3 et l'une quelconque des revendications 1 à 5, le procédé étant automatisé par :
- découpe au moins de la couche adhésive durcissable (2.1, 2.2), du film thermoplastique amorphe (3.1, 3.2) et de la fibre sèche (4.1, 4.2) par une machine à commande numérique par ordinateur ;
- éventuellement, découpe de couches d'infusion auxiliaires telles qu'une couche de décollement (5.1, 5.2), des films antiadhésifs perforés (6.1, 6.2) et tout treillis d'infusion de résine (7.1, 7.2) par la machine à commande numérique par ordinateur ;
- éventuellement, disposition d'une fibre sèche inférieure (4.2) et de tout matériau d'infusion auxiliaire sur un moule simple face (12) par une machine de transfert ;
- disposition d'un film thermoplastique amorphe inférieur (3.2), d'une couche adhésive durcissable inférieure (2.2), de l'âme en nid d'abeilles (1), d'une couche adhésive durcissable supérieure (2.1) et d'un film thermoplastique amorphe supérieur (3.1) par la machine de transfert ;
- disposition d'une fibre sèche (4.1) par-dessus, et éventuellement de tout matériau d'infusion auxiliaire, par la machine de transfert ; et
- disposition d'une feuille à vide (8, 9,10) par-dessus, formant ainsi un espace étanche aux gaz.

7. Procédé destiné à fabriquer un panneau sandwich selon l'une quelconque des revendications 1 à 6, le procédé comprenant en outre la réalisation automatique d'un thermoformage avec membrane sur la fibre sèche supérieure (4.1) par-dessus l'ensemble avant le durcissement complet ou partiel de toute couche adhésive (2.1, 2.2).

8. Panneau sandwich fabriqué par le procédé selon l'une quelconque des revendications 1 à 7, le panneau sandwich comprenant une âme en nid d'abeilles (1) ayant des cellules de nid d'abeilles et, au moins sur un côté de ladite âme en nid d'abeilles, de l'intérieur vers l'extérieur : une couche adhésive durcissable (2.1) et un film thermoplastique amorphe (3.1) ; et
**caractérisé en ce que** :
le film thermoplastique amorphe (3.1) est constitué de polyfluorure de vinyle (PVF), polyéthercétonecétone (PEKK), polyaryléthercétone (PAEK), polyétheréthercétone (PEEK), polyéthylèneimine (PEI) ou polysulfure de phénylène (PPS).
